# EUROPÄISCHE PATENTANMELDUNG

(11) **EP 1 143 433 A1**
(43) Veröffentlichungstag der Anmeldung: **10.10.2001**
(21) Anmeldenummer: 00810202.2
(22) Anmeldetag: 10.03.2000
(51) Int. Cl.: G11B 7/26, B29C 65/48

(54) **Vorrichtung zur Herstellung eines scheibenförmingen Datenträgers**

(71) Anmelder: BMO Treuhand und Verwaltung AG, 8212 Neuhausen am Rheinfall (CH)
(72) Erfinder: BMO Treuhand und Verwaltung AG, 8212 Neuhausen am Rheinfall (CH)
(74) Vertreter: Patentanwälte Breiter + Wiedmer AG

(57) **Zusammenfassung**

Eine Vorrichtung zum Zusammenfügen von zwei mit einem Klebstoff (16) beschichteten, mit einer zentralen Öffnung (18) versehenen Scheiben (12,14) aus einem Material mit Kunststoff als wesentlichem Bestandteil zu einem scheibenförmigen Datenträger weist zwei Halterelemente (40,42) mit einer planen Oberfläche als Auflagefläche für die Scheiben (12,14) auf. An der Oberfläche der Auflageflächen münden Saugleitungen (78,80) zur Erzeugung eines die Scheiben (12,14) an den Auflageflächen haltenden Unterdrucks. Jedes Halterelement (40,42) ist innerhalb einer zu einer Fügekammer (21) mit einem evakuierbaren Zwischenraum (86) verschliessbaren Kammerhälfte (24, 26) angeordnet. Zum Zentrieren der Scheiben (12,14) auf den Halterelementen (40,42) weist jede Kammerhälfte (24,26) einen die Halterelemente (40,42) durchdringenden Zentrierpin (62,64) auf. Zum Zusammenfügen der mit Klebstoff (16) beschichteten Scheiben (12,14) ist zumindest ein Halterelemente (40) in seiner Kammerhälfte (24) in Richtung (z) auf das andere Halterelement (42) bewegbar. Die Zentrierpins (62,64) sind unter die Auflagefläche einfahrbar, und ihre bei geschlossener Fügekammer (21) einander gegenüberstehenden Stirnflächen sind ineinander eingreifbar ausgestaltet. Mit der Vorrichtung lassen sich scheibenförmige Datenträger vom Typ DVD im wesentlichen spannungsfrei mit hoher Planheit und ausgezeichneter Planparallelität ihrer Oberflächen herstellen.

## Beschreibung

Die Erfindung betrifft eine Vorrichtung zum Zusammenfügen von zwei mit einem Klebstoff beschichteten, mit einer zentralen Öffnung versehenen Scheiben aus einem Material mit Kunststoff als wesentlichem Bestandteil zu einem scheibenförmigen Datenträger, mit zwei Halterelementen zum zeitweiligen Halten der miteinander zu verklebenden Scheiben, wobei die Halterelemente eine plane Oberfläche als Auflagefläche für die mit Klebstoff beschichteten Scheiben aufweisen und Saugleitungen zur Erzeugung eines die Scheiben an den Auflageflächen haltenden Unterdruckes an der Oberfläche der Auflageflächen münden, wobei jedes Halterelement innerhalb einer zu einer Fügekammer mit einem evakuierbaren Zwischenraum verschliessbaren Kammerhälfte angeordnet ist, wobei zum Zentrieren der Scheiben auf den Halterelementen jede Kammerhälfte einen die Halterelemente durchdringenden Zentrierpin aufweist, und wobei zum Zusammenfügen der mit Klebstoff beschichteten Scheiben zumindest ein Halterelement in seiner Kammerhälfte in Richtung gegen das andere Halterelement bewegbar ist.

Scheibenförmige Datenträger vom Typ DVD müssen eine extrem hohe Planheit aufweisen. Zur Erzielung einer ausreichenden Stabilität werden die Datenträger durch Verkleben von zwei Scheiben hergestellt, wobei eine Scheibe üblicherweise als Stützscheibe und die andere Scheibe als eigentliche Datenscheibe dient. Grundsätzlich können die Datenträger jedoch auch aus zwei miteinander verklebten Datenscheiben bestehen.

Beim Verkleben der Scheiben muss zur Einhaltung der geforderten engen Planheitstoleranzen sowie zusätzlich der Planparallelität der beiden Scheibenoberflächen nach dem Klebevorgang streng darauf geachtet werden, dass beim Zusammenfügen der mit Klebstoff beschichteten Scheiben keine Spannungen in den Scheibenverbund eingebracht und die Scheiben während des Klebevorgangs in planparalleler Lage gehalten werden.

Bei bekannten Fügeverfahren werden die mit Klebstoff beschichteten Scheiben durch Halterelemente gehalten und frei zusammengefügt. Die derart zusammengefügten Scheiben werden nachfolgend zur Erhöhung der Kleberhaftung und zur endgültigen Aushärtung des Klebers einem Pressvorgang unterworfen.

Eine Vorrichtung der eingangs genannten Art ist in der DE-U-299 04 325 offenbart. Bei dieser vorbekannten Fügestation bleiben die Zentrierpins durch Federkraft immer ausgefahren. Beim Schliessen der Form stossen die planen Stirnflächen flächig aufeinander und werden lediglich durch Federkraft kraftschlüssig fixiert.

Mit den Fügeverfahren nach der DE-U-299 04 325 lassen sich die bei Datenträgern vom Typ DVD geforderten engen Toleranzen bezüglich Planheit und Planparallelität ihrer Oberflächen zwar erzielen, wobei allerdings der eigentliche Pressvorgang auf einer zusätzlichen Pressenstation durchgeführt werden muss.

Der Erfindung liegt deshalb die Aufgabe zugrunde, eine Vorrichtung der eingangs genannten Art zu schaffen, mit der Datenträger vom Typ DVD mit hoher Planheit und ausgezeichneter Planparallelität ihrer Oberflächen hergestellt werden können und die eine Zentrierung aufweist, welche es ermöglicht, den Pressvorgang direkt in der Fügestation durchzuführen.

Zur erfindungsgemässen Lösung der Aufgabe führt, dass die Zentrierpins unter die Auflagefläche der Halterelemente einfahrbar sind und ihre bei geschlossener Fügekammer einander gegenüberstehenden Stirnflächen selbstzentrierend ineinander eingreifbar ausgestaltet sind.

Mit der erfindungsgemässen Ausgestaltung der Zentrierpins ergibt sich ein Scheibenverbund, der einerseits frei von Lufteinschlüssen in der Haftfläche ist und andererseits keine oder nur äusserst geringe mechanische Spannungen aufweist.

Zweckmässigerweise ist jeder Zentrierpin mittels einer eigenen Hubeinrichtung in Achsenrichtung verschiebbar, wobei die Zentrierpins bevorzugt jeweils in einer Büchse gleitend gelagert sind.

Bei einer besonders bevorzugten Ausgestaltungsform der erfindungsgemässen Fügestation liegt das zumindest eine Halterelement einem in Achsenrichtung bewegbaren Presskolben auf oder wird von diesem gebildet. Eine optimale Führung des Presskolbens innerhalb der Fügekammer kann dadurch erzielt werden, dass der Presskolben zwischen der Innenwand einer Kammerhälfte und der äusseren Oberfläche der zugehörigen Büchse gleitend gelagert ist.

Zweckmässigerweise ist der Presskolben pneumatisch betätigbar.

Die Auflageflächen der Halterelemente sind als Pads bevorzugt aus Kunststoff gefertigt und sind plangeschliffen Die Pads sind üblicherweise etwa 1 bis 8 mm dick und weisen eine Härte von etwa 60 bis 90 Shore auf. Ein geeigneter Kunststoff ist z.B. Polyurethan, Silikon- oder Fluorkautschuk und ist zur Erzielung einer antistatischen Wirkung ggf. elektrisch leitend.

Bei einer bevorzugten Ausführungsform der erfindungsgemässen Vorrichtung sind die beiden Kammerhälften über eine gemeinsame Drehachse von einer Offen- in eine Schliessstellung schwenkbar.

Zur Erzielung einer Vorzentrierung der Fügekammer können die beim Schliessen der Fügekammer einander gegenüber liegenden Randbereiche der Fügeschale und des Deckels selbstzentrierend ineinander eingreifbar und planparallel zueinander ausrichtbar ausgestaltet sein.

Ein besonders bevorzugter Anwendungsbereich der erfindungsgemässen Vorrichtung liegt in der Herstellung von scheibenförmigen Datenträgern vom Typ DVD.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Querschnitt durch einen scheibenförmigen Datenträger;
- Fig. 2 - 4: eine Schrägsicht auf eine Fügestation in verschiedenen Öffnungsstadien der Fügekammer;
- Fig. 5: eine teilweise geschnittene Seitenansicht der Fügekammer der Fügestation von Fig. 2;
- Fig. 6: den Querschnitt durch die Fügekammer von Fig. 5 vor dem Fügehub;
- Fig. 7: den Querschnitt durch die Fügekammer von Fig. 5 nach dem Fügehub.

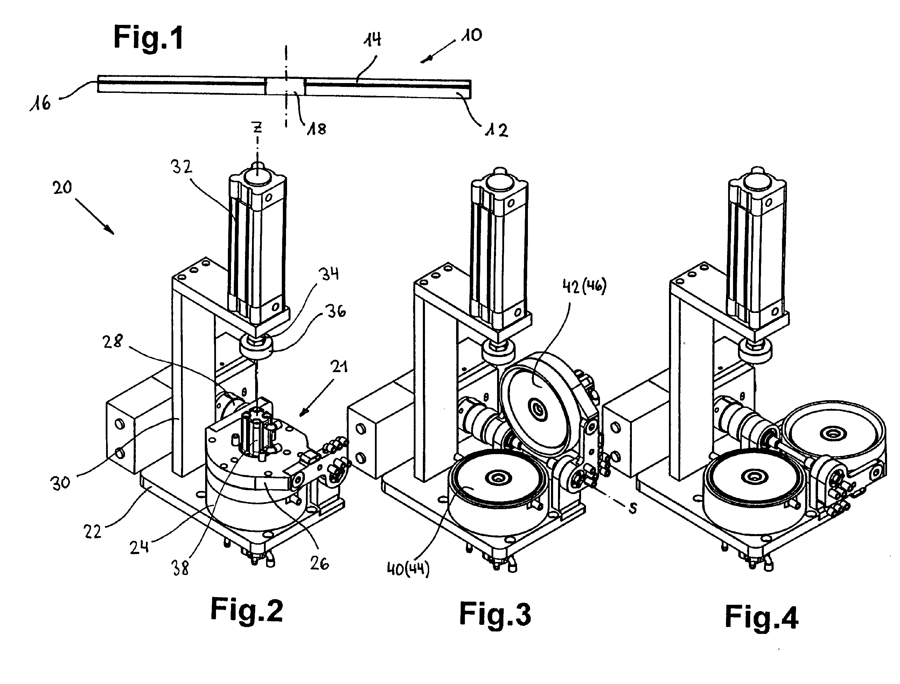

Ein in Fig. 1 gezeigter scheibenförmiger Datenträger 10 vom Typ DVD besteht aus einer Stützscheibe 12 und einer Datenscheibe 14, die über eine Hotmelt-Kleberschicht 16 zu einem Scheibenverbund zusammengefügt sind. Die Stützscheibe 12 kann grundsätzlich eine zweite Datenscheibe sein. Die beiden Scheiben 12, 14 bestehen beispielsweise aus Polycarbonat und sind zusätzlich metallisiert. Zur späteren Positionierung in einem Lese- bzw. Abspielgerät weisen die miteinander zu verklebenden Scheiben 12, 14 und damit auch der scheibenförmige Datenträger 10 eine zentrale Öffnung 18 auf.

Eine in den Fig. 2 bis 4 dargestellte Fügestation 20 mit einer Fügekammer 21 in verschiedenen Öffnungsstadien ist auf einer Grundplatte 22 aufgebaut, auf welcher eine Fügeschale 24 der Fügekammer 21 ortsfest montiert ist. Das Verschliessen der Fügekammer 21 erfolgt mit einem Deckel 26, der mittels eines Drehladers 28 durch Schwenken um eine Drehachse s auf die Fügeschale 24 aufgesetzt wird.

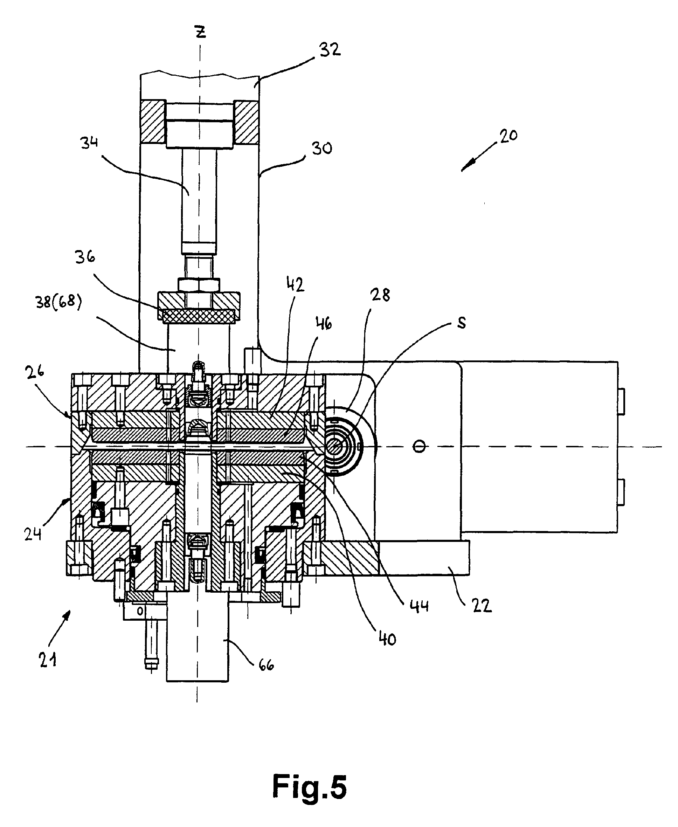

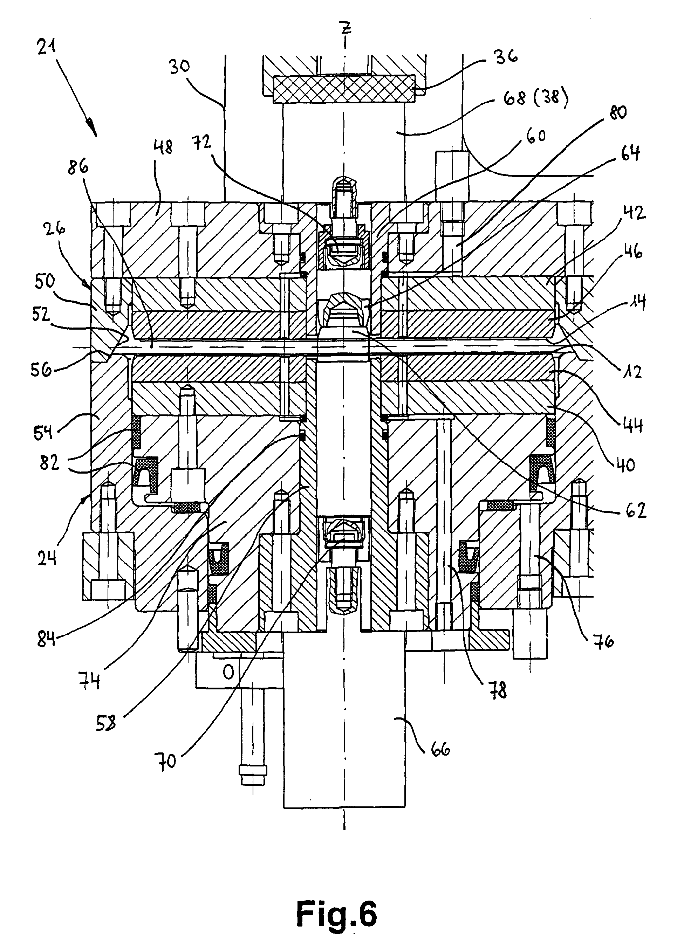

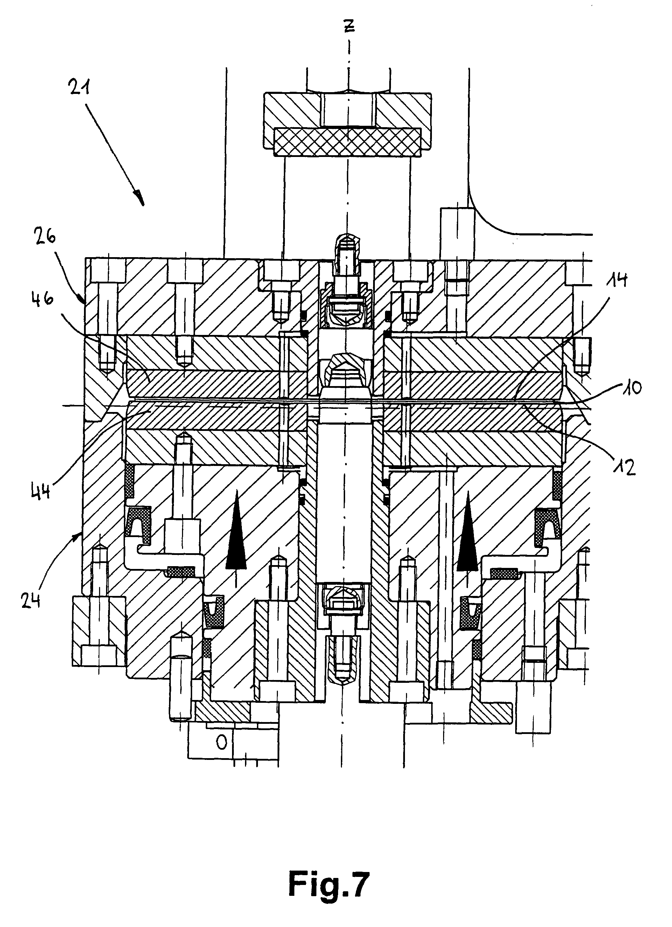

Von der Grundplatte 22 ragt ein Träger 30 als Halterung für einen pneumatischen Hubzylinder 32 auf. Der Hubzylinder 32 umfasst eine Kolbenstange 34 mit einem Pressstempel 36, der, wie aus Fig. 5 ersichtlich, während des weiter unten anhand der Fig. 6 und 7 näher erläuterten Fügevorganges einem auf dem Deckel 26 der Fügekammer 21 angeordneten Gegenlager 38 anliegt.

Die in den Fig. 6 und 7 detailliert dargestellte Fügekammer 21 weist einen in der Fügeschale 24 angeordneten unteren Auflageteller 40 sowie einen im Dekkel 26 angeordneten oberen Auflageteller 42 auf. Die Oberflächen der beiden Auflageteller 40, 42 werden von je einem Pad 44, 46 gebildet. Diese Pads 44, 46 weisen eine beispielsweise Dicke von 8 mm auf und bestehen z.B. aus Polyurethan mit einer Härte von 70 Shore und sind vollkommen plangeschliffen.

Der Deckel 26 weist eine Bodenplatte 48 und einen von dieser aufragenden umlaufenden Rand 50 auf, dessen Innenfläche 52 gegen das freie Ende hin konisch erweitert ist. Die Wand 54 der Fügeschale 24 weist eine entsprechende konische nach einwärts gerichtete Gegenfläche 56 auf, die beim Schliessen der Fügekammer 21 mit der konischen Innenfläche 52 am Deckel 26 in Anlage gelangt, so dass Fügeschale 24 und Deckel 26 selbstzentrierend und planparallel zueinander ausrichtbar ausgestaltet sind. Der Deckel 26 ist auf der der Fügeschale 24 so gelagert, dass er in 4 Freiheitsgraden beweglich ist, nämlich bezüglich Planheit (x,y) und Verkippung (x,y). Über den Konus werden die Scheiben (DVD-Hälften) 12, 14 zentriert und über die Auflageflächen (Innenfläche 52, Gegenfläche 56) plan ausgerichtet. Prioritär ist die Planparallelität, die Zentrizität weist ein Spiel von etwa 20 bis 40 µm auf.

Mit der Fügeschale 24 fest verbunden ist eine zentral in der Hubachse z angeordnete Büchse 58. In gleicher Weise ist im Deckel eine Büchse 60 angeordnet. Die beiden Büchsen 58, 60 dienen der Aufnahme und der gleitenden Lagerung je eines Zentrierpins 62, 64. Der untere Zentrierpin 62 ist mit einer kegelförmig ausgebildeten Spitze versehen. Der obere Zentrierpin 64 ist an seiner Spitze mit einer Ausnehmung versehen, deren Kontur der kegelförmigen Spitze des unteren Zentrierpins 62 entspricht.

Die beiden Zentrierpins 62, 64 sind zur Ausführung der Verschiebungsbewegungen innerhalb der Büchsen 56, 58 über Lager 70, 72 mit je einem Hubzylinder 66, 68 verbunden.

Ein mit dem unteren Auflageteller 40 fest verbundener Presskolben 74 ist über Dichtungsringe 82, 84 an der Innenwand der Fügeschale 24 und am äusseren Umfang der Büchse 58 gleitend geführt und über einen Pneumatikanschluss 76 in der Hubachse z verschiebbar.

An den Oberflächen der Pads 44, 46 auf den Auflagetellern 40, 42 münden Saugleitungen 78, 80, über die ein Unterdruck an der Rückseite der eingelegten Scheiben 12, 14 zum Festhalten der Scheiben während des Schliessvorganges der Fügekammer 21 erzeugt werden kann. Eine weitere, in der Zeichnung nicht dargestellte Saugleitung dient der Erzeugung eines Vakuums des zwischen den Auflagetellern 40, 42 bzw. den Pads 44, 46 vor dem Fügehub vorhandenen Zwischenraumes 86.

Nachfolgend wird die Funktionsweise der in den Fig. 2 bis 4 dargestellten Fügestation 20 mit der in den Fig. 6 und 7 detailliert gezeigten Fügekammer beschrieben.

Die aus einer Hotmelt-Anlage austretenden, mit einer Klebstoffschicht versehenen Scheiben (DVD-Hälften) 12, 14 werden mittels eines Handlings auf die Pads 44, 46 in der Fügeschale 24 bzw. im Deckel 26 der offenen Fügekammer 21 gelegt. Sobald das Handling, welches die Scheiben 12, 14 ablegt, den Fügebereich verlassen hat, fahren die unteren und oberen Zentrierpins 62, 64 aus und zentrieren damit die Scheiben 12, 14 mittels deren zentralen Öffnungen 18 auf den Pads 44, 46. Hierbei werden die beiden Scheiben über die Saugleitungen 78, 80 mittels eines Vakuums auf den Pads 44, 46 gehalten. Anschliessend werden die Zentrierpins 62, 64 wieder eingefahren. Die Fügekammer 21 wird nun mittels des pneumatisch angetriebenen Drehladers 28 geschlossen. Bei Annäherung des Deckel 26 an die Fügeschale 24 erfolgt über die konische Ausbildung der Innenfläche 52 am Deckel 26 und der konischen Gegenfläche 56 an der Fügeschale eine selbsttätige Vorzentrierung.

Sobald die Fügekammer 21 geschlossen ist, wird der untere Zentrierpin 62 wieder aus- und in den oberen Zentrierpin 64 eingefahren. Durch die konische Ausbildung der Spitze des unteren Zentrierpins 62 und der ebenfalls konischen Ausbildung der Ausnehmung an der Spitze des oberen Zentrierpins 64 erfolgt bei Annäherung der beiden Zentrierpins 62, 64 eine Selbstzentrierung. Hierbei erfolgt ein Formschluss zwischen den beiden Zentrierpins 62, 64, der zu einer genauen gegenseitigen Einstellung der miteinander zu verklebenden Scheiben 12, 14 führt. In dieser formschlüssigen Stellung der beiden Zentrierpins 62, 64 werden die an der Oberfläche des oberen Pads 46 mündenden Saugleitungen 80 entlüftet, so dass die durch das Vakuum im Deckel 26 gehaltene Scheibe 14 auf die untere Scheibe 12 "fällt". Während dieses Vorganges wird der Zwischenraum 86 zwischen den Pads 44, 46 in der Fügekammer 21 unter Vakuum gesetzt, damit die beiden Scheiben 12, 14 ohne Lufteinschlüsse im Kleber gefügt werden können.

Nachdem die beiden Scheiben 12, 14 einander auf dem unteren Pad 44 anliegen, wird der Hubzylinder 32 betätigt und die Kolbenstange 34 ausgefahren, bis der endständige Pressstempel 36 dem als Gegenlager 38 dienenden oberen Hubzylinder 68 für den oberen Zentrierpin 64 anliegt. Anschliessend wird der Press- und Fügekolben 74 über die Pneumatikleitung 76 mit Druckluft beaufschlagt. Durch die so entstehende Pressenkraft werden die beiden Scheiben (DVD-Hälften) 12, 14 zusammengefügt. Mit dieser Anordnung kann die in der DE-U-299 04 325 vorgesehene Pressenstation entfallen.

Nach der Fügezeit wird der untere Zentrierpin 62 wieder eingefahren, am Fügekolben 74 die Druckluft abgeschaltet und die Kolbenstange 34 mit Pressstempel 36 wieder hochgefahren. Anschliessend wird die Fügekammer 21 mit Luft geflutet und nachfolgend der Deckel 26 wieder zurückgeschwenkt, d.h. die Fügekammer 21 geöffnet. Der fertige Scheibenverbund (DVD) 10 wird anschliessend von einem Handling entnommen und die Fügekammer 21 ist zur Aufnahme der nächsten zwei Scheiben 12, 14 bereit.

## Patentansprüche

1. Vorrichtung zum Zusammenfügen von zwei mit einem Klebstoff (16) beschichteten, mit einer zentralen Öffnung (18) versehenen Scheiben (12,14) aus einem Material mit Kunststoff als wesentlichem Bestandteil zu einem scheibenförmigen Datenträger (10), mit zwei Halterelementen (40,42) zum zeitweiligen Halten der miteinander zu verklebenden Scheiben (12,14), wobei die Halterelemente (40,42) eine plane Oberfläche als Auflagefläche für die mit Klebstoff (16) beschichteten Scheiben (12,14) aufweisen und Saugleitungen (78,80) zur Erzeugung eines die Scheiben (12,14) an den Auflageflächen haltenden Unterdruckes an der Oberfläche der Auflageflächen münden, wobei jedes Halterelement (40,42) innerhalb einer zu einer Fügekammer (21) mit einem evakuierbaren Zwischenraum (86) verschliessbaren Kammerhälfte (24, 26) angeordnet ist, wobei zum Zentrieren der Scheiben (12,14) auf den Halterelementen (40,42) jede Kammerhälfte (24,26) einen die Halterelemente (40,42) durchdringenden Zentrierpin (62,64) aufweist, und wobei zum Zusammenfügen der mit Klebstoff beschichteten Scheiben (12,14) zumindest ein Halterelemente (40) in seiner Kammerhälfte (24) in Richtung (z) gegen das andere Halterelement (42) bewegbar ist,
**dadurch gekennzeichnet, dass**
die Zentrierpins (62,64) unter die Auflagefläche der Halterelemente (40,42) einfahrbar sind und ihre bei geschlossener Fügekammer (21) einander gegenüberstehenden Stirnflächen selbstzentrierend ineinander eingreifbar ausgestaltet sind.

2. Vorrichtung nach Anspruch 1, **dadurch gekennzeichnet, dass** jeder Zentrierpin (62,64) mittels einer Hubeinrichtung (66,68) in Achsenrichtung (z) verschiebbar ist.

3. Vorrichtung nach Anspruch 2, **dadurch gekennzeichnet, dass** die Zentrierpins (62,64) in einer Büchse (58,60) gleitend gelagert sind.

4. Vorrichtung nach einem der Ansprüche 1 bis 3, **dadurch gekennzeichnet, dass** das zumindest eine Halterelement (40) einem in Achsenrichtung (z) bewegbaren Fügekolben (74) aufliegt oder von diesem gebildet ist.

5. Vorrichtung nach Anspruch 3 und 4, **dadurch gekennzeichnet, dass** der Fügekolben (74) zwischen der Innenwand einer Kammerhälfte (24) und der äusseren Oberfläche der zugehörigen Büchse (58) gleitend gelagert ist.

6. Vorrichtung nach Anspruch 4 oder 5, **dadurch gekennzeichnet, dass** der Fügekolben (74) pneumatisch betätigbar ist.

7. Vorrichtung nach einem der Ansprüche 1 bis 6, **dadurch gekennzeichnet, dass** die Auflageflächen der Halterelemente (40, 42) als Pads (44, 46) von einer plangeschliffenen Kunststoffauflage gebildet sind

8. Vorrichtung nach Anspruch 7, **dadurch gekennzeichnet, dass** die Pads (44,46) etwa 1 bis 8 mm dick sind und eine Härte von etwa 60 bis 90 Shore aufweisen.

9. Vorrichtung nach Anspruch 7 oder 8, **dadurch gekennzeichnet, dass** die Pads (44,46) aus Polyurethan, Silikon- oder Fluorkautschuk, ggf. elektrisch leitend, bestehen.

10. Vorrichtung nach einem der Ansprüche 1 bis 9, **dadurch gekennzeichnet, dass** die beiden Kammerhälften (24,26) über eine gemeinsame Drehachse (s) von einer Offen- in eine Schliessstellung schwenkbar sind.

11. Vorrichtung nach einem der Ansprüche 1 bis 10, **dadurch gekennzeichnet, dass** die beim Schliessen der Fügekammer (21) einander gegenüber liegenden Randbereiche der Fügeschale (24) und des Deckels (26) selbstzentrierend ineinander eingreifbar und planparallel zueinander ausrichtbar ausgestaltet sind.

12. Verwendung der Vorrichtung nach einem der Ansprüche 1 bis 11 zur Herstellung von scheibenförmigen Datenträgern (10) vom Typ DVD.
